# FASCICULE DE BREVET EUROPEEN

(11) **EP 0 629 641 B1**
(45) Date de publication et mention de la délivrance du brevet: **28.01.1998**
(21) Numéro de dépôt: 94401290.5
(22) Date de dépôt: 08.06.1994
(51) Int. Cl.: C08F 255/10, C10L 1/14, C10M 157/00

(54) **Polyisobutènes polyfonctionnels, leur préparation, leur formulation et leur utilisation**
Polyfunktionelle Polyisobutylene, ihre Herstellung, ihre Formulierung und ihre Anwendung
Polyfunctional polyisobutylenes, their preparation, their formulation and their use

(30) Priorité: 16.06.1993 FR 9307354
(43) Date de publication de la demande: 21.12.1994
(73) Titulaire: INSTITUT FRANCAIS DU PETROLE, 92502 Rueil-Malmaison (FR)
(72) Inventeur: Durand, Jean Pierre, F-78400 Chatou (FR); Gateau, Patrick, F-78310 Maurepas (FR); Binet, Daniel, F-92500 Rueil Malmaison (FR); Bregent, Roger, F-78250 Oinville sur Montcient (FR)

(56) Documents cités:
- EP-A- 0 542 726
- WO-A-90/03359
- WO-A-91/04959
- WO-A-93/06194
- DATABASE WPI Section Ch, Week 8435, Derwent Publications Ltd., London, GB; Class A95, AN 84-216314 & JP-A-59 126 496 (NIPPON ZEON KK) 21 Juillet 1984

## Description

La présente invention concerne de nouveaux polyisobutènes polyfonctionnels exempts de chlore, leur préparation, leur modification chimique et leur utilisation, notamment comme additifs pour carburants et lubrifiants.

Dans le domaine des additifs pétroliers, notamment des additifs détergents pour carburants moteurs et des dispersants pour lubrifiants moteurs, on fait très souvent appel, pour synthétiser les composés amphiphiles recherchés pour de telles applications, à des polyisobutènes fonctionnalisés, le plus souvent à l'aide d'anhydride maléique. Les anhydrides polyisobuténylsucciniques recherchés sont préparés suivant trois procédés principaux. Le premier consiste en la condensation d'anhydride maléique sur du polyisobutène suivant une réaction de ène-synthèse. Une telle réaction nécessite une température élevée (220-235°C) et l'utilisation d'un excès d'anhydride maléique de façon à obtenir des rendements de l'ordre de 65 à 75 % au bout de 24 heures. Toutefois, dans ces conditions apparaissent des résines résultant de la polymérisation de l'anhydride maléïque ce qui nécessite une étape de filtration, rendue très délicate par la consistance de ces produits secondaires.

Dans un second type de procédé de fabrication d'anhydride polyisobutényl-succinique, on réalise d'abord une chloration du polyisobutène suivie de la condensation du polyisobutène chloré et d'anhydride maléïque. Malgré la consommation de chlore, ce procédé concurrence le précédent grâce à un abaissement de la température de réaction, une meilleure conversion et l'absence de réactions secondaires conduisant à des résines insolubles. Toutefois, ce procédé conduit habituellement à des produits contenant une certaine quantité de chlore résiduelle.

Une troisième technique de fabrication d'anhydride polyisobuténylsuccinique consiste à faire réagir le polyisobutène et l'anhydride maléïque en présence de chlore. Cette technique présente l'avantage de pouvoir conduire à des polyisobutènes contenant plus de 1 et jusqu'à 2 molécules d'anhydride succinique par molécule de polyisobutène. Une telle caractéristique permet l'obtention, après réaction avec des polyéthylènepolyamines, de produits de polycondensation de masse moléculaire plus élevée que ceux résultant de la même réaction mais utilisant des anhydrides polyisobuténylsucciniques issus des deux premiers types de procédés décrits. De tels dérivés, de masse moléculaire élevée, sont particulièrement appréciés dans le domaine des additifs dispersants sans cendres pour lubrifiants moteurs.

Toutefois, ces produits comme ceux résultant du second procédé contiennent une quantité de chlore résiduelle qui les exclut d'un nombre d'applications de plus en plus important, compte tenu des spécifications de plus en plus sévères concernant les teneurs en chlore des additifs pétroliers, pour des questions d'environnement.

L'utilisation dans le premier procédé décrit (ène-synthèse) de polyisobutènes plus réactifs vis-à-vis de l'anhydride maléïque, notamment des polyisobutènes dont la teneur en doubles liaisons "exo" est supérieure à 50 %, n'a pas permis de supprimer la formation de résines insolubles, nécessitant une étape de filtration longue, délicate et coûteuse.

La présente invention propose de nouveaux polyisobutènes polyfonctionnels, exempts de chlore et avantageusement utilisables pour la préparation d'additifs pétroliers, notamment détergents pour carburants moteurs et dispersants sans cendres pour lubrifiants moteurs.

Ces polyisobutènes polyfonctionnels, utilisables notamment, après modification par des amines, des alcools et/ou des aminoalcools, comme additifs dans les carburants moteurs et les lubrifiants moteurs, peuvent être définis d'une façon générale comme obtenus par terpolymérisation radicalaire d'isobutène, d'anhydride maléïque et de polyisobutène.

Les polyisobutènes utilisés pour une telle polymérisation sont de préférence obtenus en présence de catalyseur ne contenant pas de chlore et possèdant une teneur en doubles liaisons "exo" supérieure à 50 %. Leur masse moléculaire moyenne en nombre est comprise entre 400 et 10000 et de préférence entre 400 et 3000.

La réaction de terpolymérisation isobutène-anhydride maléïque-polyisobutène est conduite selon toute technique faisant intervenir un mécanisme radicalaire mais de préférence en solution dans un solvant organique, en présence d'un initiateur radicalaire à une température comprise entre 40 et 150°C. Parmi les initiateurs radicalaires, qui peuvent être utilisés, on mentionnera le peroxyde de dicumyle, le peroxyde de ditertiobutyle, le peroxyde de benzoyle, le peroxyde de lauryle, l'hydroperoxyde de lauryle, l'hydroperoxyde de tertiobutyle, l'azobisisobutyronitrile, le persulfate de sodium, le peroxydicarbonate de diéthyle, le peroxydicarbonate de diisopropyle, le peroxydicarbonate de dicyclohexyle, le peroxypivalate de tertiobutyle, le perbenzoate de tertiobutyle, le peroctoate de tertiobutyle, le peracétate de tertiobutyle ou le peroxyde de 2,4-pentane dione. Habituellement, la concentration de l'initiateur radicalaire est comprise entre 0,05 et 0,5 % en poids de la masse totale du mélange réactionnel.

Parmi les solvants organiques qui peuvent être utilisés, on mentionnera l'hexane, l'heptane, le toluène et les xylènes, mais on donnera la préférence à des coupes commerciales de préférence aromatiques, ou a une huile minérale telle que de l'huile minérale 100 ou 150 Neutral. La teneur en solvant dans le mélange réactionnel sera comprise entre 0 et 80 % poids. Le choix du solvant sera guidé par le domaine d'utilisation des produits finaux (additifs carburants ou additifs lubrifiants). Le polyisobutène pourra être également ce solvant en l'absence de tout autre solvant additionnel.

Les proportions en anhydride maléïque, isobutène et polyisobutène dans le mélange réactionnel seront choisies de telle façon que le terpolymère obtenu soit soluble dans le solvant de réaction choisi. De préférence, elles seront choisies de façon à ce que la teneur molaire en anhydride maléïque soit inférieure ou ou au plus égale à la somme isobutène + polyisobutène.

Les terpolymères de l'invention ainsi obtenus peuvent être modifiés pour conduire à des additifs utilisés dans le domaine pétrolier. Parmi les agents chimiques utilisés pour de telles modifications, on mentionnera particulièrement des amines, des polyamines, des alcools, des polyols et des aminoalcools qui seront avantageusement choisis parmi ceux qui contiennent au plus 10 atomes de carbone.

Parmi les amines utilisées on mentionne plus spécialement les polyamines suivantes : la diméthylamino- propylamine, la diéthylène triamine, la triethylène tétramine et la tétraéthylène pentamine, mais on donnera la préférence à des mélanges à base de diméthyl amino propylamine et de polyéthylène polyamines telles que la diéthylène triamine, la triéthylène tétramine, la tétraéthylène pentamine.

Dans un mode préféré de fabrication des additifs de l'invention la diméthylamino propylamine sera ajoutée dans une première étape et ensuite la polyéthylène polyamine, de préférence la tétraéthylènepentamine, sera ajoutée au mélange réactionnel.

Parmi les alcools utilisés, on mentionnera le méthanol, l'éthanol, l'isopropanol, l'éthylhexanol ou des polyols tels que le triméthylolpropane, le pentaérythritol ou le dipentaérythritol.

Parmi les aminoalcools, on utilisera de préférence des composés ayant une fonction amine primaire et de 1 à 3 fonctions hydroxyles, tels que par exemple l'amino-2 méthyl-2 propanol ou le trishydroxyméthylaminométhane.

Ces réactions de modification des polyisobutènes fonctionnels de l'invention sont conduites de préférence dans les solvants organiques utilisés dans l'étape de copolymérisation à des températures habituellement comprises entre 60 et 250°C et de préférence entre 80 et 200°C.

Généralement les additifs de l'invention peuvent être utilisés dans les carburants ou dans les lubrifiants, seuls ou en combinaison avec d'autres additifs conventionnels.

Comme additifs détergents dans les carburants, ils seront utilisés dans des proportions allant de 50 à 2000 ppm en poids et de préférence de 100 à 1000 ppm en poids. Dans le cas de détergents dans les essences, ils seront le plus souvent associés à une huile porteuse, de préférence du type polyéthylène glycol ou copolymère oxyde d'éthylène-oxyde de propylène, et aux autres additifs couramment utilisés dans les essences. Dans les carburants Diesel, les additifs détergents de l'invention pourront être utilisés en combinaison avec les additifs généralement utilisés tels que désémulsifiant, antimousse, anticorrosion, masque d'odeur, améliorant l'indice de cétane et améliorant de la tenue au froid.

Les additifs de d'invention, peuvent être également utilisés comme additifs dispersants dans les lubrifiants seuls ou en combinaison avec d'autres additifs conventionnels. Dans une telle application, ils peuvent être utilisés dans des proportions allant de 0,1 à 20 % en poids du lubrifiant, suivant l'usage auquel le lubrifiant est destiné et suivant la présence ou l'absence d'autres additifs spécialement dispersants et/ou détergents.

Ordinairement, leur proportion pourra varier de 1 à 10 % en poids du lubrifiant. Les additifs de l'invention peuvent être incorporés à diverses huiles de bases minérales, synthétiques ou mixtes, utilisées à des fins diverses, telles que les lubrifiants pour moteurs à combustion interne à allumage commandé ou à allumage par compression (comme par exemple les moteurs d'automobiles ou de camions, les moteurs deux temps, les moteurs d'avion à piston, les moteurs marins ou encore les Diesel ferroviaires). De plus, les fluides de transmission automatique, d'engrenage, de travail des métaux, d'hydraulique et les graisses peuvent aussi bénéficier de l'incorporation des additifs de l'invention.

Normalement, les produits de l'invention pourront être utilisés en mélange avec d'autres additifs conventionnels. Ceux-ci comprennent des produits phosphorés ou soufrés améliorant les propriétés extrême-pression, des détergents organométalliques, tels que les phénate-sulfures, les sulfonates et les salicylates de métaux alcalino-terreux, des dispersants sans cendres, des polymères épaississants, ainsi que des anticongelants, des inhibiteurs d'oxydation, des agents anticorrosifs, antirouille et antimousse.

Les exemples suivants illustrent l'invention. Les exemples 2 et 3 sont donnés à titre comparatif.

### Exemple 1

Dans un réacteur équipé d'un système d'agitation, on introduit :
- 786 g d'une coupe aromatique ayant un point initial de distillation de 186°C et un point final de 214°C;
- 117,7 g d'anhydride maléïque ;
- 600 g de polyisobutène de masse moléculaire moyenne en nombre voisine de 1000 et dont la composition des doubles liaisons terminales, déterminée par RMN, est la suivante : 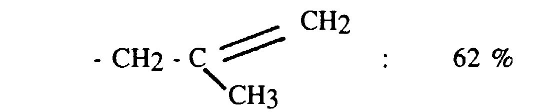 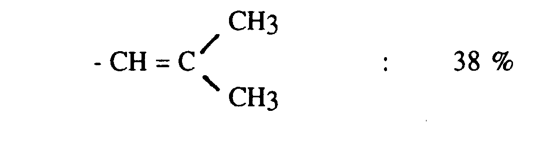
- 66 g d'isobutène ; et
- 3,1 g de per 2-éthyl hexanoate de tertiobutyle

Le mélange réactionnel est agité pendant 5 à 6 heures à 80-85°C, conduisant à une solution de couleur jaune contenant un mélange de 60% en poids de terpolymère isobutène-anhydride maléïque-polyisobutène et de 40% en poids de polyisobutène en solution dans la coupe aromatique utilisée comme solvant.

### Exemple 2 (comparatif)

Si dans l'exemple 1, toutes choses étant égales par ailleurs, on remplace le polyisobutène utilisé par un polyisobutène de même masse moléculaire mais dont la composition des doubles liaisons terminales déterminées par RMN est la suivante : 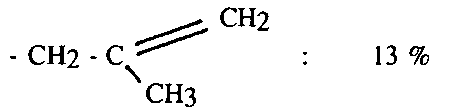 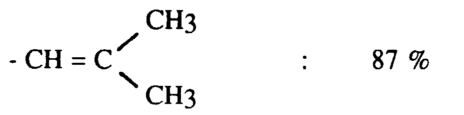 le mélange réactionnel obtenu en fin de réaction est composé du polyisobutène de départ et de copolymère alterné isobutène-anhydride maléïque insoluble dans le solvant..

### Exemple 3 (comparatif)

Si dans l'exemple 1, toutes choses étant égales par ailleurs, on n'ajoute pas le polyisobutène, le mélange réactionnel obtenu en fin de réaction est composé de copolymère alterné isobutène-anhydride maléique insoluble dans le solvant utilisé.

### Exemple 4

Dans un réacteur équipé d'un système d'agitation, on introduit :
- 938 g d'une coupe aromatique ayant un point initial de distillation de 186°C et un point final de 214°C ;
- 117,7 g d'anhydride maléïque ;
- 750 g de polyisobutène de masse moléculaire moyenne voisine de 1250 et dont la composition des doubles liaisons terminales, déterminée par RMN, est la suivante : 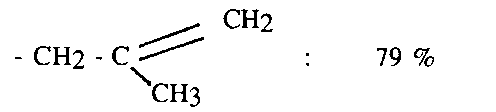 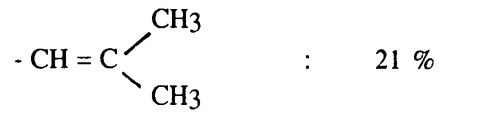
- 66 g d'isobutène ; et
- 4,5 g de per 2-éthyl hexanoate de tertiobutyle.

Le mélange réactionnel est agité pendant 6 heures à 85°C conduisant à un mélange de 50% en poids de terpolymère isobutène-anhydride maléïque-polyisobutène et de 50% en poids de polyisobutène en solution dans la coupe aromatique solvant.

### Exemple 5

Si dans l'exemple 4, toutes choses étant égales par ailleurs, on remplace le solvant par une huile minérale 150 N, on obtient un mélange de polyisobutène et de terpolymère en solution dans ladite huile minérale.

### Exemple 6

A 200 g du mélange réactionnel obtenu dans l'exemple 1, on ajoute 3,7 g de diméthylaminopropylamine et 3,7 g de la coupe aromatique utilisée dans l'exemple 1. Le mélange réactionnel ainsi obtenu est agité pendant 2 heures à 160°C. Le mélange réactionnel est ensuite additionné de 6,8 g de tétraéthylènepentamine et de 6,8 g de la coupe aromatique utilisée dans l'exemple 1 et agité pendant 3 heures à 160°C. Le mélange obtenu à une teneur en azote de 1,6 % et un TBN de 35. (TBN = Indice de Base Total).

### Exemple 7

A 395 g du mélange réactionnel obtenu dans l'exemple 4, on ajoute 5,8 g de diméthylaminopropylamine et 5,8 g de la coupe aromatique utilisée dans l'exemple 4. Le mélange réactionnel ainsi obtenu est agité pendant 2 heures à 160°C et ensuite additionné de 10,8 g de tétraéthylènepentamine et de 10,8 g de la coupe aromatique utilisée comme solvant. Après réaction pendant 3 heures à 160°C. Le mélange réactionnel ainsi obtenu a une teneur en azote de 1,3% et un TBN de 28.

### Exemple 8

Dans l'exemple 7, toutes choses étant égales par ailleurs, on remplace la solution de terpolymère initiale par celle obtenue dans l'exemple 5 et le solvant par une huile minérale 150 N.

### Exemple 9

Des séries d'essais moteurs sont réalisées afin d'évaluer les performances des additifs dérivés des copolymères de l'invention comme détergents pour carburants.

### a) Détergent gazole

- Un test d'encrassement des injecteurs sur moteur XUD9 est effectué en utilisant comme carburant un gazole dont les caractéristiques sont détaillées dans le Tableau 1.
La tendance à l'encrassement est donnée par le débit résiduel moyen des quatre injecteurs, obtenu après 6 heures de fonctionnement du moteur.
Des tests d'encrassement des injecteurs sont réalisés en utilisant le même gazole mais additivé avec 500 ppm de la solution obtenue dans l'exemple 6.
Les résultats obtenus dans les deux essais et rassemblés dans le Tableau 2 montrent qu'à la fin de l'essai, les injecteurs ayant fonctionné avec le carburant contenant l'additif selon l'invention sont beaucoup moins calaminés que les injecteurs ayant fonctionné avec le carburant non additivé.

### b) Détergent essences

- Une formulation à base de 100 parties de l'additif de l'exemple 6 et de 50 parties de polypropylène glycol de masse moléculaire voisine de 1000 est préparée.
Une série d'essais moteurs est réalisée afin d'évaluer l'influence des additifs selon l'invention pour obtenir une diminution importante des dépôts sur les divers organes du moteur, en particulier au niveau des soupapes d'admission et du carburateur.

La méthode d'essai concernant la propreté des carburateurs utilise un moteur RENAULT R5 et dure 12 heures (méthode CEC F-03-T-81). Le carburant utilisé est un carburant sans plomb. En fin d'essai, le corps de papillon du carburateur est coté visuellement et une valeur de "MERITE" lui est attribuée. Les mérites obtenus avec l'essence de référence non additivée et l'essence de référence additivée avec 750 ppm de la formulation à base de l'additif de l'exemple 4 et de polypropylène-glycol sont respectivement de 5,8 et de 9,2.

La méthode d'essai réalisée afin d'évaluer l'influence des additifs de l'invention sur la propreté des soupapes d'admission utilise un moteur Mercédès type M 102 E et elle fonctionne de façon cyclique selon un schéma porte à porte, durant 60 heures. Le carburant de référence utilisé est un carburant sans plomb ayant un indice d'octane "RECHERCHE" de 96,8. On procède à deux essais, le premier en absence d'additif et le second en présence de 750 ppm de la formulation à base de l'additif de l'exemple 6 et de polypropylèneglycol.
Les résultats obtenus (Tableau 3) exprimés en poids (gramme) de dépôts mesurés sur les tulipes de chaque soupape (côté chapelle d'admission), montrent que la quantité de dépôts sur les soupapes d'admission obtenue en utilisant la formulation contenant l'additif selon l'invention est nettement inférieure à celle obtenue en l'absence d'additif.

**TABLEAU 1**

| CARACTERISTIQUES DU GAZOLE UTILISE DANS L'EXEMPLE 9 | |
|---|---|
| masse volumique | 0,834 g/ml |
| teneur en soufre | 0,29% poids |
| P. de trouble °C | 0 |
| TLF°C | -6 |
| Pt d'écoulement °C | -9 |
| indice de cétane | 52 |
| distillation-Pt initial | 179°C |
| 5 % | 203 |
| 10 % | 214 |
| 20 % | 234 |
| 30 % | 251 |
| 40 % | 266 |
| 50 % | 280 |
| 60 % | 294 |
| 70 % | 309 |
| 80 % | 326 |
| 90 % | 349 |
| 95 % | 367 |
| Point final | 375 |

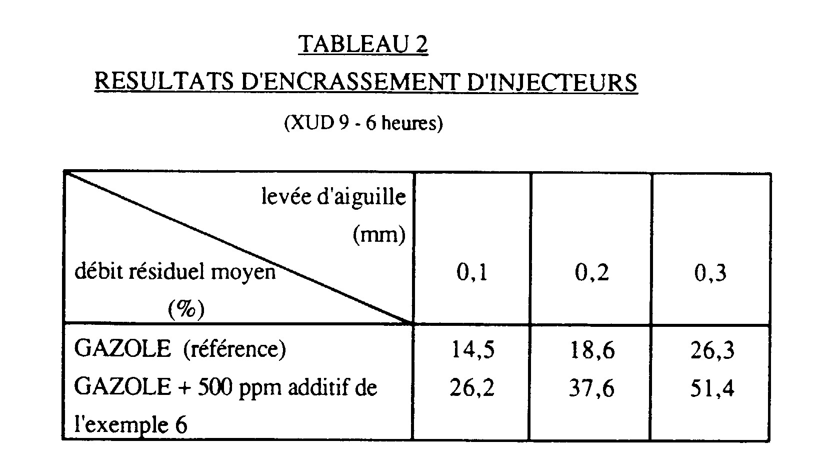

**TABLEAU 3**

| ESSAI M 102 E - QUANTITE DE DEPOTS (en grammes) | | |
|---|---|---|
| | Sans additif | Avec additif * |
| Teneur en ppm | 0 | 750 |
| soupape 1 | 0,347 | 0,193 |
| soupape 2 | 0,324 | 0,008 |
| soupape 3 | 0,331 | - |
| soupape 4 | 0,169 | 0,008 |
| Total | 1,171 | 0,209 |
| Dépôt moyen/soupape (g) | 0,293 | 0,052 |

| | | |
|---|---|---|
| * 500 ppm de la solution d'additif obtenue dans l'exemple 6 et 250 ppm de polypropylène glycol. | | |

### Exemple 10

A 200 g du mélange réactionnel obtenu dans l'exemple 5, on ajoute 13 g de triméthylolpropane. Le mélange est ensuite porté à 160 °C pendant 8 heures.

### Exemple 11

A 200 g du mélange réactionnel obtenu dans l'exemple 5, on ajoute 12 g de trishydroxyaminométhane. Le mélange est ensuite porté à 165°C pendant 7 heures.

### Exemple 12

Les produits obtenus dans les exemples 8, 10 et 11 sont additionnés à raison de 3 % en poids de matières actives à une huile minérale formulée mais ne contenant pas d'additif dispersant sans cendres.

L'effacité dispersante des produits de l'invention est évaluée par l'essai à la tache sur papier filtre, en présence de matière charbonneuse issue d'une huile usagée de moteur Diesel. Le rapport entre les diamètres de la tache noire et de l'auréole d'huile est déterminé au bout de 48 heures, le mélange ayant subi, avant dépôt sur le papier filtre, différents traitements. Les conditions de l'essai à la tache et les résultats obtenus sont rassemblés dans le tableau 4. Dans ce tableau figurent également les résultats obtenus dans les mêmes conditions, avec l'huile formulée en absence d'additif dispersant sans cendres (mélange 0).

L'examen des résultats figurant dans le tableau 4, montre que les additifs de l'invention présentent une excellente efficacité dispersante.

**TABLEAU 4**

| Références Produit de l'exemple | Matières actives | 20°C | 10 min | 10 min | + 1 % eau | | |
|---|---|---|---|---|---|---|---|
| | % en poids | | 200°C | 250°C | 20°C | 1 min 200°C | 10 min 200°C |
| mélange (0) ^{(*)} (a) | 0 | 50 | 48 | 46 | 42 | 22 | 28 |
| Ex 8 | 3 | 69 | 75 | 75 | 71 | 77 | 76 |
| Ex 10 | 3 | 68 | 70 | 70 | 68 | 67 | 67 |
| Ex 12 | 3 | 70 | 75 | 74 | 72 | 76 | 76 |

| | | | | | | | |
|---|---|---|---|---|---|---|---|
| (*) Essai comparatif | | | | | | | |
| (a) Huile formulée sans additif dispersant sans cendres. | | | | | | | |

## Revendications

1. Composition de terpolymère isobutène-anhydride maléïque-polyisobutène exempte de chlore et soluble en milieu hydrocarboné liquide, caractérisée en ce qu'elle est obtenue par terpolymérisation radicalaire d'isobutène, d'anhydride maléïque et de polyisobutène ayant une teneur moyenne en double liaisons terminales "exo" d'au moins 50 % et une masse moléculaire moyenne en nombre comprise entre 400 et 10000.

2. Composition selon la revendication 1, caractérisée en ce que ladite terpolymérisation radicalaire est conduite dans un solvant organique, en présence d'un initiateur radicalaire, et à une température comprise entre 40 et 150°C.

3. Composition selon la revendication 2, caractérisée en ce que la concentration de l'initiateur radicalaire est comprise entre 0,05 et 0,5 % en poids de la masse totale du mélange réactionnel.

4. Composition selon l'une des revendications 2 et 3, caractérisée en ce que la teneur en solvant dans le mélange réactionnel est d'au plus 80 % en poids.

5. Composition selon l'une des revendications 1 à 4, caractérisée en ce que dans sa préparation, la quantité molaire en anhydride maléique est au plus égale à la somme des quantités molaires d'isobutène et de polyisobutène.

6. Composition de terpolymère isobutène-anhydride maléïque-polyisobutène modifiée, caractérisée en ce qu'elle est préparée à partir d'une composition selon l'une des revendications 1 à 5 par réaction avec au moins un composé choisi parmi les amines, les polyamines, les alcools, les polyols et les aminoalcools.

7. Composition modifiée selon la revendication 6, caractérisée en ce que, dans sa préparation, on effectue la réaction d'abord avec de la diméthylaminopropylamine, puis avec de la tétraéthylènepentamine.

8. Composition modifiée selon l'une des revendications 6 et 7, caractérisée en ce que ladite réaction est conduite dans un solvant organique à une température comprise entre 60 et 250°C.

9. Composition de carburant caractérisée en ce qu'elle comprend une proportion majeure d'au moins un carburant et, à titre d'additif, une proportion mineure suffisante pour en améliorer les propriétés détergentes d'au moins une composition modifiée selon l'une des revendications 6 à 8.

10. Composition selon la revendication 9, caractérisée en ce que ledit carburant est une essence.

11. Composition selon la revendication 9, caractérisée en ce que ledit carburant est un gazole.

12. Composition selon l'une des revendications 9 à 11, caractérisée en ce que ladite proportion mineure est de 50 à 2000 ppm en poids.

13. Composition de lubrifiant caractérisée en ce qu'elle comprend une proportion majeure d'au moins une huile lubrifiante et, à titre d'additif, une proportion mineure suffisante pour en améliorer les propriétés détergentes d'une composition modifiée selon l'une des revendications 6 à 8.

14. Composition selon la revendication 13, caractérisée en ce que ladite proportion mineure est de 0,1 à 20 % en poids.

## Patentansprüche

1. Isobuten/Maleinsäureanhydrid/Polyisobuten-Terpolymer-Zusammensetzung, die frei von Chlor und in einem flüssigen Kohlenwasserstoff-Medium löslich ist, dadurch gekennzeichnet, daß sie erhalten wird durch radikalische Terpolymerisation von Isobuten, Maleinsäureanhydrid und Polyisobuten, das einen mittleren Gehalt an endständigen "Exo"-Doppelbindungen von mindestens 50 % und eine mittlere zahlendurchschnittliche Molekularmasse zwischen 400 und 10 000 aufweist.

2. Zusammensetzung nach Anspruch 1, dadurch gekennzeichnet, daß die genannte radikalische Terpolymerisation in einem organischen Lösungsmittel in Gegenwart eines radikalischen Initiators und bei einer Temperatur zwischen 40 und 150°C durchgeführt wird.

3. Zusammensetzung nach Anspruch 2, dadurch gekennzeichnet, daß die Konzentration des radikalischen Initiators zwischen 0,05 und 0,5 Massenprozent, bezogen auf die Gesamtmasse der Reaktionsmischung, liegt.

4. Zusammensetzung nach einem der Ansprüche 2 und 3, dadurch gekennzeichnet, daß der Lösungsmittel-Gehalt in der Reaktionsmischung höchstens 80 Gew.-% beträgt.

5. Zusammensetzung nach einem der Ansprüche 1 bis 4, dadurch gekennzeichnet, daß bei ihrer Herstellung die Molmenge von Maleinsäureanhydrid höchstens gleich der Summe der Molmengen von Isobuten und Polyisobuten ist.

6. Modifizierte Isobuten/Maleinsäureanhydrid/Polyisobuten-Terpolymer-Zusammensetzung, dadurch gekennzeichnet, daß sie hergestellt worden ist aus einer Zusammensetzung nach einem der Ansprüche 1 bis 5 durch Umsetzung mit mindestens einer Verbindung, ausgewählt aus den Aminen, den Polyaminen, den Alkoholen, den Polyolen und die Aminoalkoholen.

7. Modifzierte Zusammensetzung nach Anspruch 6, dadurch gekennzeichnet, daß man bei ihrer Herstellung die Umsetzung zunächst mit Dimethylaminopropylamin und dann mit Tetraethylenpentamin durchführt.

8. Modifzierte Zusammensetzung nach einem der Ansprüche 6 und 7, dadurch gekennzeichnet, daß die genannte Umsetzung in einem organischen Lösungsmittel bei einer Temperatur zwischen 60 und 250°C durchgeführt wird.

9. Kraftstoff-Zusammensetzung, dadurch gekennzeichnet, daß sie einen größeren Mengenanteil mindestens eines Kraftstoffs und als Additiv einen geringeren Mengenanteil mindestens einer modifizierten Zusammensetzung nach einem der Ansprüche 6 bis 8, der ausreicht, um die Detergenz-Eigenschaften zu verbessern, enthält.

10. Zusammensetzung nach Anspruch 9, dadurch gekennzeichnet, daß der genannte Kraftstoff ein Benzin ist.

11. Zusammensetzung nach Anspruch 9, dadurch gekennzeichnet, daß der genannte Kraftstoff ein Gasöl ist.

12. Zusammensetzung nach einem der Ansprüche 9 bis 11, dadurch gekennzeichnet, daß der genannte kleinere Mengenanteil 50 bis 2000 Gew.-ppm beträgt.

13. Schmiermittel-Zusammensetzung, dadurch gekennzeichnet, daß sie einen größeren Mengenanteil mindestens eines Schmieröls und als Additiv einen kleineren Mengenanteil einer modifizierten Zusammensetzung nach einem der Ansprüche 6 bis 8, der für die Verbesserung der Detergenz-Eigenschaften ausreicht, enthält.

14. Zusammensetzung nach Anspruch 13, dadurch gekennzeichnet, daß der genannte kleinere Mengenanteil 0,1 bis 20 Gew.-% beträgt.

## Claims

1. Isobutene-maleic anhydride-polyisobutene terpolymer composition free of chlorine and soluble in liquid hydrocarbon medium, characterized in that it is obtained by radical terpolymerization of isobutene, maleic anhydride, and polyisobutene having an average content of "exo" end double bonds of at least 50 % and an average molecular weight in number between 400 and 10000.

2. Composition according to claim 1, characterized in that said radical terpolymerization is conducted in an organic solvent, in the presence of a radical initiator, and at a temperature between 40° and 150° C.

3. Composition according to claim 2, characterized in that the concentration of radical initiator is between 0.05 and 0.5 % by weight of the total weight of the reaction mixture.

4. Composition according to one of claims 2 and 3, characterized in that the content of solvent in the reaction mixture is at most 80 % by weight.

5. Composition according to one of claims 1 to 4, characterized in that, in its preparation, the molar amount of maleic anhydride is at most equal to the sum of the molar amounts of isobutene and polyisobutene.

6. Modified isobutene-maleic anhydride-polyisobutene terpolymer composition, characterized in that it is prepared from a composition according to one of claims 1 to 5 by reaction with at least one compound selected from amines, polyamines, alcohols, polyols and amino alcohols.

7. Modified composition according to claim 6, characterized in that the isobutene-maleic anhydride-polyisobutene terpolymer composition is reacted first with dimethylamino-propylamine, and then with tetraethylenepentamine.

8. Modified composition according to one of claims 6 and 7 characterized in that said reaction is conducted in an organic solvent at a temperature between 60° and 250°C.

9. Fuel composition characterized in that it comprises a major proportion of fuel and, as an additive, a minor proportion effective to improve the detergent properties of said fuel, of at least a modified composition according to one of claims 6 to 8.

10. Composition according to claim 9, characterized in that said fuel is a gasoline.

11. Composition according to claim 9, characterized in that said fuel is a diesel fuel.

12. Composition according to one of claims 9 to 11, characterized in that said minor proportion is 50 to 2000 ppm by weight.

13. Lubricating composition, characterized in that it comprises a major proportion of lubricating oil and, as an additive, a minor proportion effective to improve the detergent properties thereof, of a modified composition according to one of claims 6 to 8.

14. Composition according to claim 13, characterized in that said minor proportion is 0.1 to 20 % by weight.
